**Europäisches Patentamt**

**European Patent Office**

**Office européen des brevets**

(11) Numéro de publication : **0 346 213 B1**

(12) # FASCICULE DE BREVET EUROPEEN

(45) Date de publication du fascicule du brevet :
26.08.92 **Bulletin 92/35**

(51) Int. Cl.⁵ : **G01C 19/64**

(21) Numéro de dépôt : **89401560.1**

(22) Date de dépôt : **06.06.89**

(54) **Dispositif de mesure, dans une gamme étendue, d'un déphasage non réciproque engendré dans un interferomètre en anneau et procédé de mesure.**

(30) Priorité : **10.06.88 FR 8807765**

(43) Date de publication de la demande :
**13.12.89 Bulletin 89/50**

(45) Mention de la délivrance du brevet :
**26.08.92 Bulletin 92/35**

(84) Etats contractants désignés :
**DE FR GB IT NL SE**

(56) Documents cités :
**EP-A- 0 168 292**
**EP-A- 0 172 391**
**EP-A- 0 283 105**

(73) Titulaire : **THOMSON-CSF**
**51, Esplanade du Général de Gaulle**
**F-92800 Puteaux (FR)**

(72) Inventeur : **Lefevre, Hervé**
**THOMSON-CSF SCPI 19, avenue de Messine**
**F-75008 Paris (FR)**
Inventeur : **Turpin, Marc**
**THOMSON-CSF SCPI 19, avenue de Messine**
**F-75008 Paris (FR)**

(74) Mandataire : **Grynwald, Albert et al**
**THOMSON-CSF SCPI**
**F-92045 PARIS LA DEFENSE CEDEX 67 (FR)**

## Description

L'invention se rapporte à un dispositif de mesure, dans une gamme étendue, d'un déphasage non réciproque engendré dans un interféromètre en anneau et son procédé de mesure.

Plus particulièrement, elle se rapporte à un gyromètre à fibre optique et à un procédé de mesure de vitesse de rotation.

Une amélioration primordiale aux gyromètres à fibre optique a été décrite dans le brevet français N°84 09311 (EP-A-0168292). Ce brevet décrit un gyromètre à fibre optique comportant un dispositif de déphasage. La commande de déphasage est obtenue par une boucle d'asservissement ou avantageusement par une double boucle d'asservissement, la seconde boucle effectuant les corrections de la quantification par la première boucle. Le dispositif décrit dans le brevet FR-84 09311 permet de travailler sur le maximum d'énergie d'une frange d'interférence et ainsi d'avoir une sensibilité et un rapport signal/bruit amélioré. Toutefois, le déphasage introduit ne peut pas croître de façon indéfinie. Ainsi, le signal de déphasage a une variation périodique.

Le dispositif décrit dans le Brevet FR-84 09311 fonctionne parfaitement pour un domaine de vitesse angulaire limité. Les boucles d'asservissement permettent de compenser des vitesses de rotation faibles. En effet, des vitesses de rotation trop fortes risquent de provoquer un accrochage du dispositif d'asservissement non plus sur la frange d'interférence d'ordre 0 mais sur une frange d'interférence suivante. Le dispositif continue de "fonctionner" parfaitement à cela près qu'on ne tient pas compte du déphasage entre la frange d'interférence sur laquelle l'asservissement se passe réellement et la frange d'interférence centrale (d'ordre 0). Il s'ensuit qu'en dehors de la gamme de fonctionnement du gyromètre les mesures sont fausses. De plus cet accrochage risque de devenir stable et les mesures risquent d'être fausses pendant une longue période.

Le dispositif selon la présente invention permet d'obtenir la précision de mesure du dispositif décrit dans le Brevet FR-84 09311 tout en étendant de façon très importante l'étendue de valeurs mesurables. Pour ce faire, un dispositif selon la présente invention comporte des moyens permettant de déterminer sur quelle frange d'interférence on travaille. Dans ce cas, un accrochage sur une frange différente ne présente plus les inconvénients dans la mesure où, dans la détermination de la vitesse, on tient compte du déphasage supplémentaire introduit par le fait que l'on ne travaille pas sur la frange centrale. Les moyens de mesure de l'ordre de la frange d'interférence sur laquelle les boucles d'asservissement sont accrochées sont effectuées par exemple en faisant, en continu, ou périodiquement, la comparaison des mesures pour des fréquences différentes. Pour des fréquences différentes, seul le zéro de la frange centrale est stable. La variation de la modulation du zéro avec la fréquence permet de déterminer sur quelle frange d'interférence on se trouve et par suite d'effectuer la compensation nécessaire à la détermination de la vitesse de rotation juste.

L'invention a principalement pour objet un gyromètre à fibre optique tel que décrit dans les revendications 1 à 5. L'invention a aussi pour objet un procédé de mesure de vitesse de rotation tel que décrit dans les revendications 6 à 11.

L'invention sera mieux comprise au moyen de la description ci-après et des figures annexées données comme des exemples non limitatifs parmi lesquels :

– la figure 1 est un schéma d'un interféromètre à fibre optique décrit dans le Brevet FR-84 09311 ;
– la figure 2 est un schéma illustrant les inconvénients des dispositifs de type connu ;
– la figure 3 est un schéma illustrant le principe du dispositif selon la présente invention ;
– la figure 4 est un schéma d'un exemple de réalisation d'un gyromètre à fibre optique selon la présente invention ;
– la figure 5 explique les principes de mesures réalisées sur un dispositif selon la présente invention.

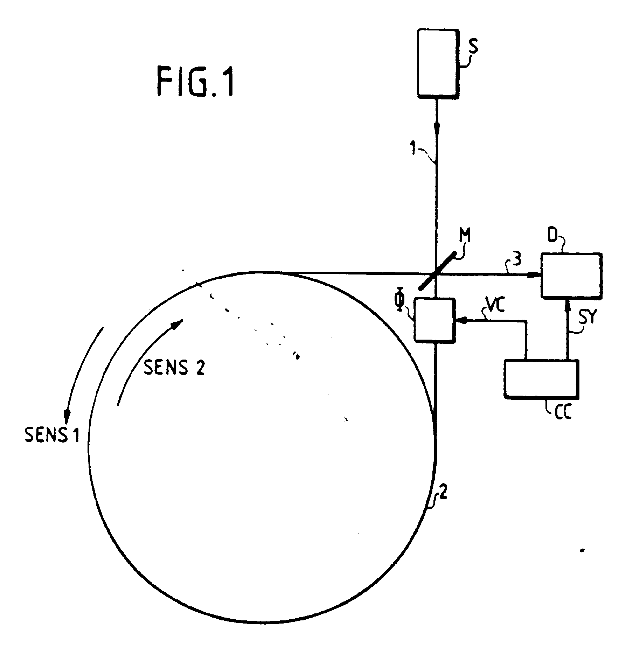

Sur les figures 1 à 5 on a utilisé les mêmes références pour désigner les mêmes éléments.

Sur la figure 1, on peut voir un gyromètre à fibre optique de type connu tel que décrit dans le Brevet FR-84 09311. Le dispositif comprend une source S de lumière cohérente 1. La lumière cohérente 1 est scindée en deux par un dispositif de séparation M. La lumière se propage dans un premier sens et dans un second sens dans un anneau 2 formé par un enroulement de fibre optique. La lumière passe, à l'entrée de l'enroulement dans un sens 2 et à la sortie de l'enroulement dans le sens 1, dans un dispositif de déphasage $\varnothing$. A la sortie le dispositif de séparation M envoie la lumière 3, qui est passée par l'anneau 2 dans le sens 1 et dans le sens 2, vers un dispositif de détection D. Le dispositif de détection D reçoit d'un circuit de contrôle CC un signal de synchronisation SY. Le dispositif de déphasage reçoit du circuit de contrôle CC un signal de contrôle VC de commande du déphasage.

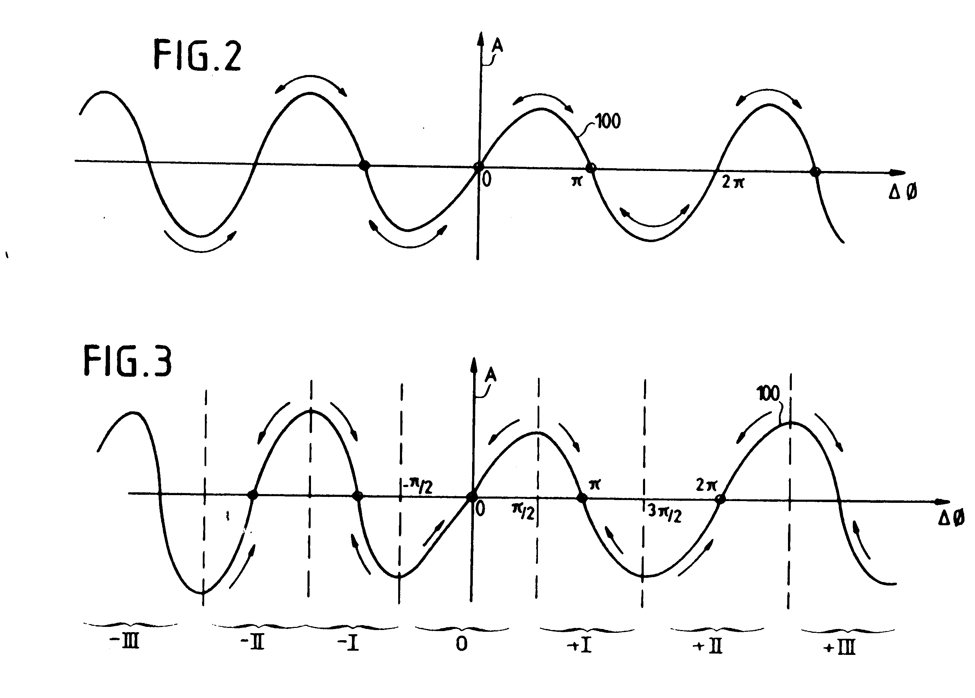

Sur la figure 2, on peut voir une courbe 100 représentant l'amplitude A du signal 3 à la sortie de l'anneau 2 de la figure 1 en fonction du déphasage $\Delta\varnothing$. Le système de la figure 1 permet d'une part de travailler sur les parties sensiblement linéaires de la sinusoïde et d'autre part de ramener une interférence à un optimum de puissance détectée. En fonctionnement normal l'asservissement ramène donc les déphasages au point 0 de l'intersection des axes $\Delta\varnothing$ et A, ce qui correspond au fait de travailler sur la frange d'ordre 0 de l'interférence. Toutefois, si on dépasse un seuil notamment $\pi$ ou $-\pi$ au niveau du

déphasage, l'asservissement risque de ramener le signal non plus vers un déphasage nul mais vers une autre intersection de la courbe 100 avec l'axe $\Delta\emptyset$ comme par exemple $\pi$, $2\pi$, $3\pi$ ou, si la vitesse de rotation est opposée $-\pi$, $-2\pi$, $-3\pi$. Cela correspond au passage d'une ou plusieurs franges d'interférence. Les directions des corrections apportées par les asservissements sont représentées par des flèches.

Le premier problème provient du fait qu'on peut parfaitement ne pas s'en apercevoir et si on s'en aperçoit on ne peut pas savoir sur quelle frange on est. Ainsi, le résultat de la valeur du déphasage $\Delta\emptyset$ détecté peut être erroné.

Le dispositif selon la présente invention permet d'effectuer un asservissement sur des franges d'interférence différentes de la frange d'ordre 0 en pouvant identifier chacune de ces franges d'interférence.

Sur la figure 3, les diverses franges d'interférence correspondent à des régions différentes du déphasage. La région référencée 0 correspond au travail autour du 0 de déphasage c'est-à-dire de la frange centrale d'interférence. Les franges d'ordre 1 correspondant à un déphasage $\Delta\emptyset$ égal à $-\pi$ ou $+\pi$ sont numérotées respectivement -I et +1. Les franges d'interférence d'ordre 2 correspondant au déphasage de $-2\pi$ et $+2\pi$ sont référencées, sur la figure 3, -II et +II et ainsi de suite.

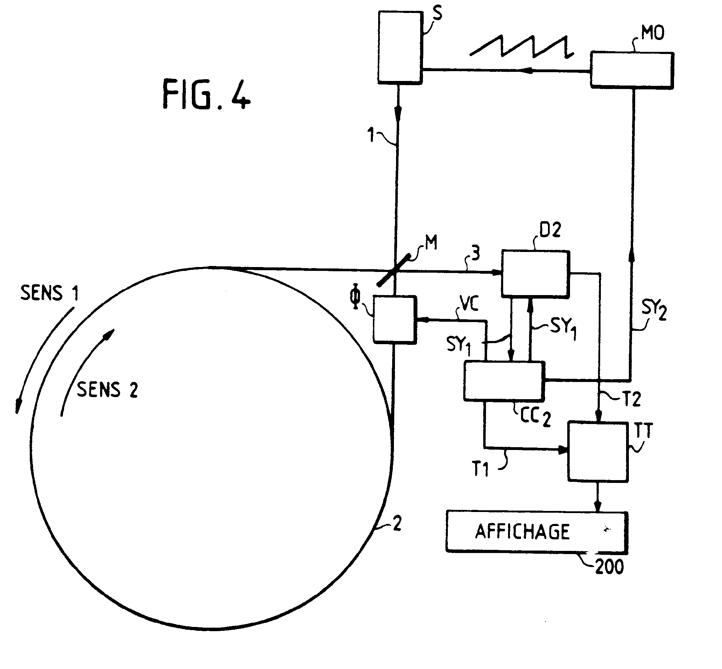

Sur la figure 4, on peut voir un exemple de réalisation du dispositif selon la présente invention permettant de déterminer sur quelle frange d'interférence on travaille pour pouvoir en déduire la vitesse de rotation. Dans l'exemple de réalisation de la figure 4, on effectue une modulation en fréquence de la source de lumière cohérente S.

Cette modulation a pour but d'obtenir au moins deux fréquences et de travailler ainsi sur au moins deux longueurs d'ondes.

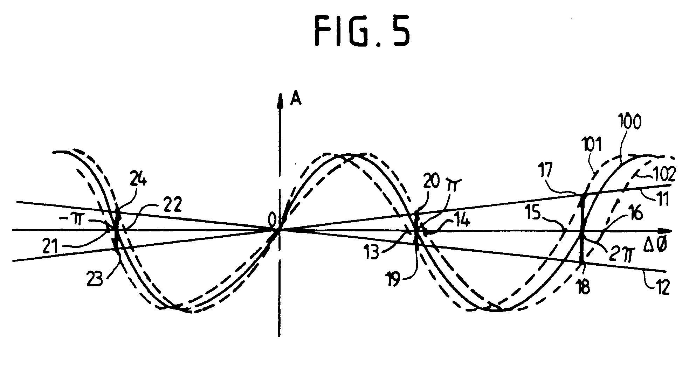

Selon un exemple de réalisation illustré par le diagramme de la figure 5, on prévoit de travailler sur trois fréquences. On travaille ainsi, par exemple, sur une longueur d'onde centrale et sur deux longueurs d'ondes dérivées de cette longueur d'onde centrale.

La longueur d'onde centrale permet au gyromètre de travailler comme décrit dans la Demande de Brevet déjà citée et permet notamment de faire fonctionner les doubles boucles d'asservissemment pour ramener le point de fonctionnement de l'interféromètre à une intersection de la courbe centrale 100 avec l'axe $\Delta\emptyset$, c'est-à-dire à l'un des points $-\pi$,$0$,$2\pi$, etc.

Seul le zéro central est indépendant de la longueur d'onde. Le décalage des franges d'interférence des différentes ondes augmente en s'éloignant de l'ordre zéro. Aux points ($-\pi$,$\pi$,$2\pi$, etc) autre que le zéro central, le zéro sera modulé à la fréquence de modulation de la source avec une amplitude d'autant plus grande que l'on sera éloigné du zéro central. Cette profondeur de modulation est représentée sur la figure 5 par le segment 19-20 au point $\pi$ et le segment 17-18 au point $2\pi$, et on voit que cette profondeur de modulation augmente en s'éloignant du zéro central.

La mesure de cette profondeur de modulation permet de déterminer à quel point de fonctionnement $-\pi$,$0$,$\pi$,$2\pi$, etc, on se trouve. Le procédé de l'invention permet ainsi d'élargir la gamme de mesure de fonctionnement du gyromètre décrit dans le brevet cité.

De façon générale, le procédé de l'invention fonctionne avec une source S modulée en fréquence. On travaille avec un continuum de longueurs d'ondes comprises entre deux longueurs d'ondes extrêmes et une longueur d'onde centrale ce qui ramène au fonctionnement précédent.

Dans ce qui précède et notamment dans la description se rapportant à la figure 5, on a considéré un fonctionnement avec trois fréquences de la source S. Le procédé de l'invention et le système qui en découlera fonctionne également en utilisant deux fréquences. Dans ce cas l'une des deux longueurs d'onde, par exemple celle donnant lieu à la courbe 101 de la figure 5, servira à régler le double asservissement de la façon déjà connue dans la Demande de Brevet déjà citée. La détection du point de fonctionnement ($-\pi$,$0$,$\pi$,$2\pi$, etc) se fait ensuite de la même façon que précédemment sur les deux longueurs d'ondes.

Pour mettre en oeuvre le procédé de l'invention selon un exemple préféré de réalisation du système de l'invention, la source S est un laser semi-conducteur. Ainsi, il est possible d'obtenir une modulation en fréquence, en effectuant, grâce à un dispositif M0, une modulation en courant du laser semi-conducteur. La modulation en courant provoque dans une certaine plage de fréquence une modulation en fréquence de la lumière 1 émise par la source S.

Dans un premier cas, la modulation est continue, par exemple en dents de scie asymétriques comme illustré sur la figure 4, en dents de scie symétriques ou est de forme sinusoïdale. La fréquence de modulation est issue d'un signal de synchronisation $SY_2$ généré par le circuit de commande CC2. La fréquence du signal de synchronisation $SY_2$ est par exemple un sous-multiple de la fréquence du signal VC de commande de modulation du modulateur de phase généré par le circuit de commande CC2. Le signal VC est déterminé par le circuit CC2 à partir d'un signal de détection SYO fourni par le dispositif de détection synchrone D2. Le circuit CC2 génère d'autre part un signal de synchronisation $SY_1$ nécessaire au fonctionnement du dispositif de détection synchrone D2 qui reçoit le signal 3 de l'anneau 3.

Le système de l'invention comporte en outre un dispositif de traitement recevant d'une part par une liaison T1, un signal de déphasage dérivé des deux asservissements appliqués par le circuit de commande CC2 et, d'autre part, par une liaison T2, la valeur de la profondeur de modulation (franges d'interférence dues aux ondes transmises par la source S) après asservissement par le circuit CC2 et obtention d'un fonctionnement à l'un des points d'ordre -π,0,π,2π, etc.

Le circuit TT détermine, à partir de l'amplitude du signal reçu sur la liaison T2, le point de fonctionnement du système. Il corrige alors en conséquence le signal de déphasage reçu sur la liaison T1.

Le résultat de la mesure est affiché sur un dispositif d'affichage 200.

Dans un second exemple de réalisation, la modulation de la source S n'est pas permanente. La source S travaille à une fréquence fixe sauf dans des instants, par exemple répartis périodiquement dans le temps, où il est nécessaire de déterminer sur quelle frange d'interférence on travaille. Une fois que la frange d'interférence a été déterminée il est possible de travailler sur une fréquence unique pendant un intervalle de temps pendant lequel on pense qu'il n'y aura pas de changement de frange d'interférence.

Pour compléter la description du système de l'invention, sur la figure 5, on peut voir l'influence de la variation de la fréquence optique et donc de la longueur d'onde sur le déphasage induit dans l'anneau 2 de la figure 1. Sur la figure 5, on a représenté en plus de la courbe 100 correspondant à une longueur d'ondes λ une courbe 101 correspondant à une longueur d'ondes λ-Δλ et une courbe 102 correspondant à λ + Δλ.

Pour un déphasage nul, les trois courbes 100,101 et 102 passent par point 0 intersection de l'axe ΔØ et l'axe A.

Par contre, pour un déphasage égal à π ou à -π de la courbe 100 de longueur d'ondes les autres courbes 101 et 102 présentent des amplitudes A non nulles. Au point π la courbe 102 présente une amplitude positive référencée 20. Au point correspondant au déphasage -π pour la courbe 100, la courbe 102 présente une amplitude positive référencée 24. Au point correspondant au déphasage π pour la courbe 100 la courbe 101 présente une amplitude A négative référencée 19. Au point correspondant au déphasage -π de la courbe 100, la courbe 101 présente une amplitude négative référencée 23.

Au point correspondant au déphasage égal à 2π pour la courbe 100 la courbe 101 présente une amplitude positive référencée 17.

Au point dont le déphasage correspond pour la courbe 100 à 2π la courbe 102 présente une amplitude négative référencée 18.

Comme on peut le voir sur l'exemple de la figure 5, les points 20 et 19,17 et 18 sont placés symétriquement par rapport à l'axe. Les amplitudes augmentent donc au fur et à mesure qu'on s'éloigne du point 0 sur l'axe.

On déterminera la frange d'interférence sur laquelle on travaille en mesurant les différences d'amplitude pour les courbes 101 et 102, soit la mesure de la modulation du zéro moyen.

On voit que la différence de valeur de déphasage pour les courbes 101 et 102 varie avec la frange d'interférence sur laquelle on travaille. L'amplitude de modulation du zéro d'asservissement est d'autant plus grande que l'ordre de la frange est élevé.

Il est évident que la détection et l'échantillonnage devront nécessairement être effectués de façon synchrone avec la modulation.

## Revendications

1. Dispositif de mesure d'un déphasage non réciproque engendré dans un interféromètre en anneau comportant des moyens de déphasage optique (Ø) et des moyens d'asservissement (CC2) d'une frange d'interférence sur laquelle on effectue les mesures de déphasage, caractérisé par le fait qu'il comporte des moyens (D2, CC2, MO) permettant d'identifier la frange d'interférence sur laquelle on travaille, des moyens (TT) permettant d'effectuer les corrections des mesures pour tenir compte d'un déphasage éventuel par rapport à la frange d'interférence d'ordre O.

2. Dispositif de mesure selon la revendication 1, caractérisé par le fait qu'il comporte une source (S) de lumière émettant, sur commande, au moins deux fréquences différentes et des moyens de détections (D2) comportant des moyens de mesure de profondeur de modulation de franges d'interférences.

3. Dispositif de mesure selon la revendication 2, caractérisé par le fait que la source (S) de lumière cohérente est un laser à semi-conducteur et qu'il comporte des moyens (MO) de modulation du courant de commande et/ou d'alimentation du laser à semi-conducteur.

4. Dispositif de mesure selon la revendication 2, caractérisé en ce que les moyens de déphasage optique (Ø) et les moyens d'asservissement (CC2) sont prévus pour fonctionner sur l'une des deux dites fréquences émises par la source (S).

5. Dispositif de mesure selon la revendication 2, caractérisé en ce que la source (S) émet trois fréquences différentes dont une fréquence centrale, les moyens de déphasage optique (φ) et les moyens d'asservissement (CC2) étant prévus pour fonctionner sur la fréquence centrale et les moyens de mesure d'amplitude (D2) fonctionnant sur les deux autres fréquences.

6. Procédé de mesure d'un déphasage non réciproque dans un interféromètre en anneau par comparaison des phases d'ondes ayant suivi un parcours dans deux sens opposés d'un anneau selon lequel on effectue un déphasage variable des ondes et un asservissement du déphasage sur une frange d'interférence, caractérisé par le fait qu'il comporte les étapes de :

– détermination de la frange d'interférence sur laquelle on travaille ;

– compensation dans les mesures d'un déphasage éventuel par rapport à la frange d'ordre 0.

7. Procédé selon la revendication 7, caractérisé par le fait que la détermination de la frange d'interférence sur laquelle on travaille est effectuée à l'aide d'au moins deux fréquences de fonctionnement différentes par mesure d'amplitude d'interférences.

8. Procédé selon la revendication 7, caractérisé par le fait que l'on effectue une modulation en fréquence de la source émettant des ondes dans les deux sens opposés de l'anneau.

9. Procédé selon la revendication 6, caractérisé par le fait que l'on effectue, à intervalles de temps réguliers, une modulation en fréquence de la source émettant les ondes dans les deux sens opposés de l'anneau.

10. Procédé selon la revendication 7,8 ou 9, caractérisé par le fait que la détermination de la frange d'interférence sur laquelle on travaille est effectuée par la mesure d'amplitude d'interférences correspondant à deux fréquences de la source.

11. Procédé selon la revendication 7,8 ou 9, caractérisé par le fait que la détermination de la frange d'interférence sur laquelle on travaille est effectuée par comparaison de l'amplitude du signal de deux fréquences différentes pour un même déphasage.

**Patentansprüche**

1. Einrichtung zum Messen einer nicht reziproken Phasenverschiebung, die in einem Ring-Interferometer erzeugt wird, mit optischen Phasenverschiebungsmitteln (∅) und Mitteln (CC2) zum Einstellen eines Interferenzstreifens, an dem die Messung der Phasenverschiebung ausgeführt wird, dadurch gekennzeichnet, daß sie versehen ist mit Mitteln (D2, CC2, MO), die die Identifikation des bearbeiteten Interferenzstreifens ermöglichen, und Mitteln (TT), die die Ausführung von Meßkorrekturen erlauben, um eine eventuelle Phasenverschiebung in bezug auf den Interferenzstreifen 0-ter Ordnung zu berücksichtigen.

2. Meßeinrichtung gemäß Anspruch 1, dadurch gekennzeichnet, daß sie versehen ist mit einer Lichtquelle (S), die auf Befehl wenigstens zwei verschiedene Frequenzen aussendet, und Erfassungsmitteln (D2), die Mittel zum Messen der Modulationstiefe der Interferenzstreifen umfassen.

3. Meßeinrichtung gemäß Anspruch 2, dadurch gekennzeichnet, daß die kohärente Lichtquelle (S) ein Halbleiterlaser ist und daß sie Mittel (MO) für die Modulation des Steuerstroms und/oder des Versorgungsstroms für den Halbleiterlaser umfaßt.

4. Meßeinrichtung gemäß Anspruch 2, dadurch gekennzeichnet, daß die optischen Phasenverschiebungsmittel (∅) und die Einstellmittel (CC2) so beschaffen sind, daß sie bei einer der beiden von der quelle (S) emittierten Frequenzen arbeiten.

5. Meßeinrichtung gemäß Anspruch 2, dadurch gekennzeichnet, daß die quelle (S) drei verschiedene Frequenzen emittiert, von denen eine eine Mittenfrequenz ist, wobei die optischen Phasenverschiebungsmittel (∅) und die Einstellmittel (CC2) so beschaffen sind, daß sie bei der Mittenfrequenz arbeiten, und wobei die Mittel zum Messen der Amplitude (D2) bei den beiden anderen Frequenzen arbeiten.

6. Verfahren zum Messen einer nicht reziproken Phasenverschiebung in einem Ring-Interferometer durch den Vergleich der Phasen von Wellen, die in zwei entgegengesetzten Richtungen eines Rings einen Weg durchlaufen haben, entlang dem eine variable Phasenverschiebung der Wellen und eine Einstellung der Phasenverschiebung auf einen Interferenzstreifen ausgeführt werden, dadurch gekennzeichnet, daß es die folgenden Schritte umfaßt:

– Bestimmung des bearbeiteten Interferenzstreifens;

– Kompensation einer eventuellen Phasenverschiebung in bezug auf den Streifen 0-ter Ordnung in den Messungen.

7. Verfahren gemäß Anspruch 6, dadurch gekennzeichnet, daß die Bestimmung des bearbeiteten Interferenzstreifens mit Hilfe von wenigstens zwei verschiedenen Arbeitsfrequenzen durch die Messung der Amplitude der Interferenzen ausgeführt wird.

8. Verfahren gemäß Anspruch 7, dadurch gekennzeichnet, daß eine Frequenzmodulation der quelle, die Wellen in den zwei entgegengesetzten Richtungen des Rings emittiert, ausgeführt wird.

9. Verfahren gemäß Anspruch 6, dadurch gekennzeichnet, daß in regelmäßigen Zeitintervallen eine Frequenzmodulation der Quelle, die die Wellen in den zwei entgegengesetzten Richtungen des Rings emittiert, ausgeführt wird.

10. Verfahren gemäß Anspruch 7, 8 oder 9, dadurch gekennzeichnet, daß die Bestimmung des bearbeiteten Interferenzstreifens durch die Messung der Amplitude der Interferenzen, die zwei Frequenzen der Quelle entsprechen, ausgeführt wird.

11. Verfahren gemäß Anspruch 7, 8 oder 9, dadurch gekennzeichnet, daß die Bestimmung des bearbeiteten Interferenzstreifens durch den Vergleich der Amplitude des Signals von zwei verschiede-nen Frequenzen bei derselben Phasenverschie-bung ausgeführt wird.

**Claims**

1. A device for the measurement of the non-reciprocal phase shift arising in a ring interferometer comprising optical phase shift means (∅) and automatic back control means (CC2) for an interference fringe on which the phase shift measurements are performed, characterized in that it comprises means (D2, CC2, MO) rendering possible the identification of the interference fringe on which the device is operating, means (TT) rendering it possible to perform corrections on the measurements in order to take into account a possible phase shift in relation to the 0 order interference fringe.

2. The measurement device as claimed in claim 1, characterized in that it comprises a source (S) of light emining, in response to a control action, at least two different frequencies and detection means (D2) comprising means for the measurement of the depth of modulation of the interference fringes.

3. The measurement device as claimed in claim 2, characterized in that the source (S) of coherent light is a semiconductor laser and in that it comprises modulation means (MO) for the control and/or supply current of the semiconductor laser.

4. The measurement device as claimed in claim 2, characterized in that the optical phase shift means (∅) and the automatic control means (CC2) are provided in order to operate on one of the two frequencies emitted by the source (S).

5. The measurement device as claimed in claim 2, characterized in that the source (S) emits three different frequencies of which one is a central frequency, the optical phase shift means (∅) and the automatic control means (CC2) being provided in order to operate on the central frequency and the amplitude measuring means (D2) operating on the two other frequencies.

6. A method for the measurement of a non-reciprocal phase shift in a ring interferometer by comparison of wave phases having followed a course in two opposite directions of a ring in which a variable wave phase shift and an automatic control of the phase shift on an interference fringe is produced, characterized in that it comprises the steps of:
   – ascertainment of the interference fringe on which the method is being performed;
   – compensation in the measurements of any phase shift in relation to the 0 order fringe.

7. The method as claimed in claim 7, characterized in that the ascertainment of the interference fringe on which the method is being performed is carried out with the aid of at least two different operating frequencies by measurement of the amplitude of interferences.

8. The method as claimed in claim 7, characterized by performing a frequency modulation of the source emining the waves in the two opposite directions of the ring.

9. The method as claimed in claim 6, characterized by performing at regular time intervals a frequency modulation of the source emining the waves in the two opposite directions of the ring.

10. The method as claimed in claim 7, in claim 8 or in claim 9, characterized in that the ascertainment of the interference fringe on which the method is being performed is carried out by the measurement of the amplitude of interferences corresponding to two frequencies of the source.

11. The method as claimed in claim 7, in claim 8 or in claim 9, characterized in that the ascertainment of the interference fringe on which the method is being performed is carried out by comparison of the amplitude of the signal of the two different frequencies for one and the same phase shift.

FIG.1

FIG.2

FIG.3

EP 0 346 213 B1

FIG. 4

# FIG. 5